# EUROPEAN PATENT SPECIFICATION

(11) **EP 0 897 451 B1**
(45) Date of publication and mention of the grant of the patent: **02.02.2000**
(21) Application number: 96940128.0
(22) Date of filing: 26.11.1996
(51) Int. Cl.: E06B 7/23

(54) **WEATHER STRIP IN PARTICULAR FOR WINDOW AND DOOR FRAMES AND THE LIKE**
DICHTUNGSSTREIFEN INSBESONDERE FÜR FENSTER- ODER TÜRRAHMEN ODER DGL.
BANDE DE CALFEUTRAGE NOTAMMENT POUR PORTES, FENETRES ET ANALOGUES

(30) Priority: 30.04.1996 WO PCT/IT96/00087
(43) Date of publication of application: 24.02.1999
(73) Proprietor: INDUSTRIE ILPEA S.P.A., 21023 Malgesso (VA) (IT)
(72) Inventor: CITTADINI, Paolo, I-21020 Luvinate (IT); CALDIROLI, Alfonso, I-Legano (Milano) (IT)
(74) Representative: Sutto, Luca
(86) International application number: PCT/IT96/00227
(87) International publication number: WO 97/41328

(56) References cited:
- EP-A- 0 176 619
- EP-A- 0 653 332
- DE-A- 2 825 303
- DE-A- 3 016 263
- DE-A- 3 828 073
- DE-U- 9 314 266
- GB-A- 2 095 315
- GB-A- 2 127 077
- US-A- 3 363 364
- PATENT ABSTRACTS OF JAPAN vol. 006, no. 134 (M-144), 21 July 1982 & JP 57 058509 A (NISSAN MOTOR CO LTD), 8 April 1982,

## Description

The present invention relates to a weather strip, in particular for window and door frames and the like.

It is known that both in the field of external window and door frames for buildings and in the motor-vehicle field, as well as in many other fields, weather strips have been widely used which are such arranged as to ensure an appropriate seal against atmospheric agents such as air, water or others.

In particular, the weather strips referred to in the present description have an extension and shape capable of matching the opening perimeter with which they are associated and, under operating conditions, they are interposed between a fixed portion such as a door or window casing or a car body for example, and a movable portion, such as the movable framework or sash of a door/window or the door of a motor-vehicle, for example.

In a traditional manner, weather strips presently available on the market comprise a shaped base portion adapted to engage a corresponding anchoring area of one of the two bearing frames forming the door or window frames or fixtures. Usually connected with the base portion, upon interposition of an intermediate portion, is a head portion intended for acting in abutment against a rabbet area defined on the second frame of the fixture so that, by carrying out the fixture closure, the desired seal over the whole perimeter thereof is achieved.

It is apparent that the sealing quality of the weather strip will be due to an appropriate planning of both the head portion and base portion.

In particular, with reference to the base portion, it is to point out that it must ensure a steady and durable engagement between the weather strip and the fixture frame on the one hand, and a perfect tightness to any external agent on the other hand.

For the purpose, many weather strip typologies have been developed in which the base portion is substantially defined by a bulged area joined to the remaining part of the weather strip by a narrow connecting portion or "neck". This type of base portion can be installed by push-fitting into a corresponding longitudinal seat formed in the fixture frame, the shape of which matches that of the base portion.

It is also known from Document DE-U-9314266 a weather strip presenting a base portion made of a stiff material adapted to carry out engagement of an anchoring area of a first bearing frame and a head portion made of elastically deformable material connected to the base portion and arranged so as to act in abutment on a second bearing frame.

The base portion is installed by push-fitting into a corresponding longitudinal seat formed in the first bearing frame which presents a shape matching that of the base portion.

Document DE-A-2825303 discloses a sealing element made of rubber presenting a base portion engaging the frame in condition of interference by means of ribs.

It is also known from document EP-A-0653332 a weather strip for attachment to a flange of a frame including a U-shaped trim portion with a metal core and including a sealing portion formed on an outerface of the trim portion. The trim portion has flanged gripping portions which project inwardly from opposed sidewalls for gripping the flange on both sides thereof.

It is also known from document GB-A-2095315 a sealing strip having a U-shaped base portion engaging a frame by means of ribs. A longitudinally extending sealing lip extends outwardly and away from the base portion for engaging a drain channel of the frame.

A sealing portion is mounted on the top of the base portion and when compressed against a second frame it provides a sealing action.

While weather strips having base portions of the above described type have been widely used for several different applications, they however have highlighted some drawbacks from a pratical and operating point of view, as clarified in detail in the following.

First of all, in weather strips provided with base portions to be push-fitted, a true longitudinal seat suitably shaped and defined in the fixture frames is required. The above clearly involves some complexity in the cross-sectional conformation of the fixture and therefore in the manufacture and production costs of same.

In addition, since a true longitudinal seat of substantially tubular conformation is to be formed in the bearing frames, many problems are encountered both in terms of anchoring and as regards a safe seal, for example either when discontinuities are found, due to the presence of locks typically disposed along the fixture perimeter, or when there are regions where sharp bendings or too acutely angled corner areas are present in the frame. In terms of installation, above all with reference to corner areas, traditional weather strips also encounter many difficulties in carrying out junctions between two consecutive strips, due to the bulged conformation of the base portions.

It is also to point out that the base portions of traditional weather strips are subjected to wear in the long run and therefore tend to reduce their sealing capabilities and the capability of matching with the fixture frame. This is particularly due to the fact that this base portion, necessarily made of a deformable material, acts on and is directly in contact with the ficture frame which is usually made of materials such as aluminium, wood or PVC, that are much harder than the base portion of the strip and therefore capable of creating tearings and/or abrasions on the deformable strip, taking into account the particular type of coupling existing with the frame itself.

It is finally to note that, since the base portion has the dual task of ensuring anchoring and achieving the necessary hermetic thightness, an extended interference fit is required for this portion, which will make any disengagement and subsequent re-engagement of the weather strip from and into the respective seat of difficult accomplishment.

It is also to be noted that document EP-A-0795672 which represent a state of the art document in accordance with Article 54 (3) EPC relates to a weather strip comprising a base portion which fits an anchoring area of a bearing frame. The weather strip also comprises a head portion connected to the base portion and abutting on a rabbet area of a second frame. The base portion presents a holding element of substantially stiff material, which engages the anchoring area of the first bearing frame, and a push element of elastically deformable material associated with the holding element and having an end portion which, in operating condition, abuts on the first bearing frame and transmits a trust action to the holding element causing a snap fitting with the anchoring area. The holding element of the sealing strip according to EP-A-0795672 defines also an undercut for receiving a corresponding projection of the anchoring area on the first bearing frame. The elastically deformable push element causes a trust action which has a resultant force directed perpendicularly to the contact area between the undercut and the projection of the first bearing frame.

This known weather strip does not comprise any extra means which would make it more suitable for use under adverse weather conditions.

Under this situation, it is a fundamental aim of the present invention to substantially solve all drawbacks mentioned above by providing a new weather strip that, on the one hand, can ensure an excellent efficiency and operating reliability and, on the other hand, is capable of being associated with fixture frames that are not necessarily provided with longitudinal tubular seats, so as to enable money to be saved in the fixture frame manufacture.

In particular, it is an object of the invention to provide a weather strip having an anchoring portion capable of accomplishing a steady engagement with the fixture frame and a very reliable and durable seal even under very heavy operating conditions.

It is a further object of the invention to make a weather strip capable of being easily fitted to and disengaged from a fixture frame without being subjected to structural decays.

The foregoing and further objects that will become more apparent in the progress of the following description are substantially achieved by a weather strip in particular for door and window frames and the like, as claimed in independent claim 1, the depending claims specifying various preferred embodiments.

Further features and advantages will best be understood from the detailed description of some preferred embodiments of a weather strip in accordance with the invention, taken hereinafter with the aid of the accompanying drawings given by way of non-limiting example and in which:

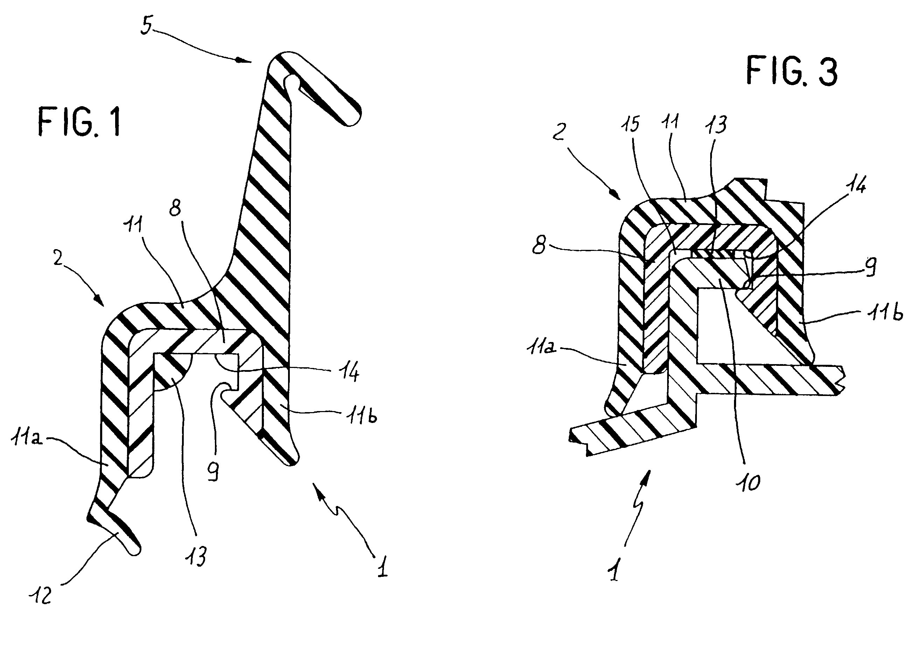

- Fig. 1 is an enlarged cross-sectional view of the weather strip of the invention under non-operating conditions;
- Fig. 2 is a cross-sectional view similar to that in Fig. 1, showing the weather strip of the invention associated with a fixture frame; and
- Fig. 3 is a fragmentary and enlarged cross-sectional view of a possible alternative embodiment of the base portion of the weather strip in reference.

With reference to the drawings, a weather strip in particular for door and window frames and the like has been generally identified by reference numeral 1.

Weather strip 1 comprises a base portion 2 arranged for fitting at an anchoring area 3 associated with a first bearing frame, generally denoted by 4, for example of a window/door fixture.

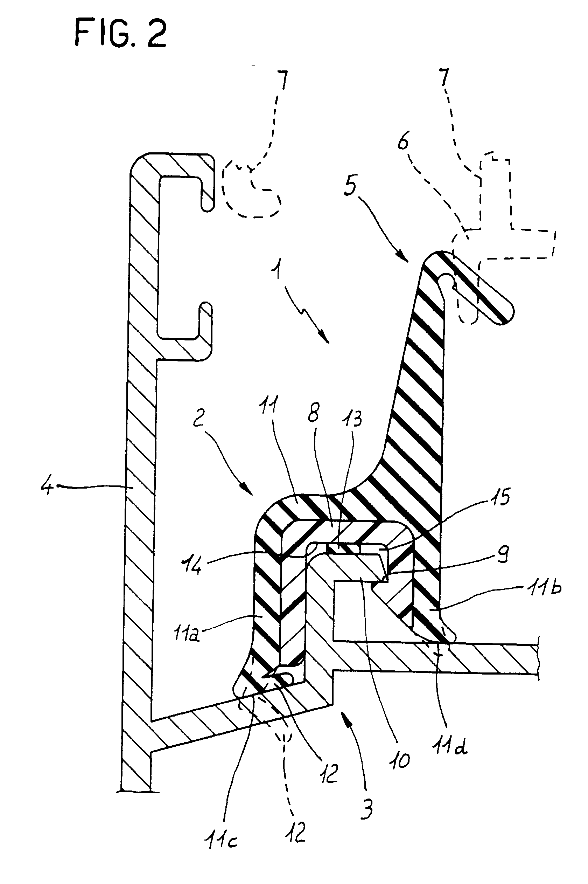

The first frame 4 can be moved from an open position (not shown) to a closed position (seen in Fig. 2) in which the weather strip conveniently performs its sealing action against external agents.

It is to point out that for the purpose, the weather strip 1 is comprised of a head portion 5 connected to the base portion and arranged to act in abutment against a rabbet area 6 of a second bearing frame generally denoted by 7 and shown in chain line in Fig. 2.

The base portion 2 of the weather strip 1 comprises a holding element 8 of stiff or substantially stiff material such as aluminium, PVC or other appropriate material. The holding element 8 is arranged to carry out engagement of the anchoring area 3 of the first bearing frame 4, and for the the purpose it defines at least one undercut 9 for receiving a corresponding projection 10, in the form of an inverted L for example, provided at the anchoring area 3 of the first frame 4.

Operatively associated with the holding element 8 is a push element 11 having at least one first end portion 11a that, under operating conditions, is arranged to act in abutment on the first frame 4 and to transmit a corresponding thrust action to the holding element 8 so that a snap-fitting occurs between said undercut 9 and the projection 10.

In greater detail, as viewed from the accompanying figures, a second end portion 11b is also provided and it is arranged in a substantially opposite position with respect to the first end portion 11a. Said second end portion 11b too is intended for acting in abutment on the first frame so that, under operating conditions, it transmits a respective thrust action capable of enabling snap-fitting of the holding element 8 with the anchoring area 3.

Practically, due to the arrangement of the the first and second portions, respective thrust actions are generated that are disposed and directed in such a manner as to give rise to a resultant directed substantially perpendicularly to the contact area between the undercut 9 and the projection 10 formed on the first frame.

It is to note that the push element 11 is made of an elastically deformable material so that the end portions 11a and 11b, due to coupling of the weather strip 1 with the first frame 4, can be subjected to elastic deformation, thereby generating said thrust actions.

From a construction point of view, it is to note that the push element 11 is perimetrically associated with the holding element 8 and is integrally coupled therewith. Preferably, connection between the push element and holding element takes place by co-extrusion which, on the one hand, enables a strong and durable coupling to be achieved and, on the other hand, offers the possibility of adopting a continuous manufacturing process, which will bring about very reduced production costs.

As can be seen from Figs. 2 and 3, by their deformation the first and second end portions not only give rise to the required thrust actions for coupling of the holding element 8 with the first frame, but also ensure creation of efficient sealing areas 11c, 11d impervious to air, water and still other agents.

More particularly, in order to improve the insulating capability to external agents, the first end portion 11a can be provided with a turned-up sealing end lip 12, as shown in the embodiment illustrated by way of example in Fig. 2.

Although weather strips of a comformation as above described offer a good seal capability under normal operating conditions, it is to note that in the presence of particularly heavy situations, in case of strong rainfalls and concurrent gusts of wind for example, the invention foresees the employment of an auxiliary sealing element 13 coupled with an operating surface 14 of the holding element 8 facing the projection 10 of said anchoring area. This leads to a very efficient weather strip.

More particularly, the auxiliary sealing element 13 comprises at least one narrow band of sealing material longitudinally associated with the holding element and extending close to a hollow space 15 that, when the base portion 2 is coupled with the anchoring area 3, is defined between said projection 10 and operating surface 14 of the holding element 8.

As regards its accomplishment, the sealing narrow band defining the auxiliary sealing element can be made either of butyl or silicone materials or still other materials capable of undergoing deformation for ensuring the necessary seal, and in particular capable of offering softness features maintained substantially constant in time, so that the weather strip performance does not decay with use.

Still with reference to the auxiliary sealing element 13, it is to note that the choice of the material is to be made taking into consideration the fact that the adhesion force between the auxiliary element and the holding element must be higher than the adhesion force that, under operating conditions, will take place between the auxiliary sealing element itself and the anchoring area of the first frame. This is essential, because otherwise phenomena of partial or complete gluing between the auxiliary sealing element and the first frame 4 would occur. Actually, in case of gluing, each time the weather strip needs to be removed, due to breakings or merely when servicing is required, tiresome operations for cleaning the frame and restoring the auxiliary sealing element on the weather strip 1 would be necessary.

From a construction point of view, the sealing narrow band of butyl or other material is associated, for example by a continuous extrusion process, with the holding element 8, after said holding element has been fixedly joined to the push element 11. In other words, as regards production, first the holding element 8 is co-extruded with the push element 11, then the two coupled elements are allowed to cool in order to make their union stable and subsequently continuous application of the sealing narrow band is carried out.

The invention achieves important advantages.

It is to note first of all that, by virtue of the new conformation of the base portion 2 provided in the weather strip in reference, door and window frames devoid of the conventional longitudinal seats of tubular form can be made. This ensures a cheaper production of the section members, which will bring about a clear advantage in the overall costs of the door/window fixtures.

It should be also recognized that the base portions 2 in the weather strip in reference can be easily joined to each other even at the corner areas or areas with sharp bendings because these portions are in any case defined by open profiles that are easily connectable.

In addition to the above, the weather strip in question is advantageously capable of ensuring an optimal seal under any (even if very heavy) operating conditions, due to the presence both of the end portions 11a and 11b and the sealing narrow band 13 associated with the holding element.

Furthermore, the described weather strip is very reliable in time because that part of the base portion 2 that is directly in contact with the window/door frame, that is the holding element 8, is made of a material having mechanical features very close to those of the frame itself, thereby avoiding arising of tearings and/or abrasions in the long run.

In conclusion, it is apparent from the above that, since in the weather strip in question the sealing and anchoring functions are distinct and separated from each other, the former being assigned to the contact areas of the end portions 11a and 11b with the frame and to the sealing narrow band 13, and the latter being assigned to the holding element 8, the greatest efficiency can be achieved by the invention as regards both anchoring and seal, and said weather strip can be easily fitted and disengaged and can offer performances substantially constant in time.

It is to point out furthermore that also the position of the narrow band 13 in the hollow space 15 is advantageous, taking into account the fact that said narrow band is required to be deformed for accomplishing the appropriate sealing action and also for enabling snap-fitting between the holding element 8 and the projection 10. To this end, the choice of the materials forming the narrow band 13 is fundamental too, because they must be of appropriate softness and possess a high adhesion capability to the holding element but a weak tendency to stick on the fixture frame.

## Claims

1. A weather strip, in particular for door and window frames and the like, comprising:
- a base portion (2) arranged for fitting at a respective anchoring area (3) of a first bearing frame (4);
- a head portion (5) connected to said base portion (2) and such arranged as to act in abutment on a rabbet area (6) of a second bearing frame (7);
- the base portion (2) having a holding element (8) made of a substantially stiff material adapted to carry out engagement of said anchoring area (3) of the first bearing frame (4); and a push element (11), made of elastically deformable material operatively associated with the holding element (8) and having at least one first end portion (11a) intended for acting, under operating conditions, in abutment on said first frame (4) and transmitting a corresponding thrust action to the holding element (8) to cause snap-fitting with said anchoring area (3), said holding element (8) defining at least one undercut (9) receving in engagement a corresponding projection (10) formed at the anchoring area (3) of said first frame (4), said push element determining a thrust action having a resultant directed perpendicularly to the contact area between the undercut (9) and the projection (10);
- the base portion (2) further having an auxiliary sealing element (13) coupled with an operating surface (14) of the holding element (8) facing the projection (10) of said anchoring area (3).

2. A weather strip as claimed in claim 1, characterized in that said push element (11) is perimetrically associated with said holding element.

3. A weather strip as claimed in claim 1, characterized in that the push element (11) is integrally coupled with said holding element (8).

4. A weather strip as claimed in claim 3, characterized in that the push element (11) is coupled with the holding element (8) by co-extrusion.

5. A weather strip as claimed in claim 1, characterized in that said push element (11) has a second end portion (11b) disposed at a substantially opposite position with respect to said first portion (11a) and also intended for acting, under operating conditions, in abutment on said first frame (4).

6. A weather strip as claimed in claim 1, characterized in that said auxiliary sealing element (13) comprises at least one narrow band of sealing material longitudinally associated with said holding element.

7. A weather strip as claimed in claim 6, characterized in that said narrow band extends within a hollow space (15) that when the base portion (2) is operatively coupled with the anchoring area (3) is defined between said projection (10) and the operating surface (14) of the holding element (8).

8. A weather strip as claimed in claim 6, characterized in that said sealing narrow band (13) is made of a material having softness features that keep constant in time.

9. A weather strip as claimed in claim 1, characterized in that at least said first end portion (11a) is provided with a turned-up sealing end lip (12).

## Patentansprüche

1. Dichtungsstreifen, insbesondere für Fenster- oder Türrahmen oder dergleichen, umfassend:
- einen Basisabschnitt (2) der bereitgestellt ist, in einem entsprechenden Verankerungsbereich (3) eines ersten Tragrahmens (4) eingebracht zu werden;
- einen Kopfabschnitt (5) der mit dem Basisabschnitt (2) verbunden und bereitgestellt ist, an einem Anschlagbereich (6) eines zweiten Tragrahmens (7) anzuschlagen;
- wobei der Basisabschnitt (2) ein Greifelement (8) besitzt, der in einem im wesentlichen starren Material ausgeführt und fähig ist, den Angriff am Verankerungsbereich (3) des ersten Tragrahmens (4) auszuführen; und ein Schubelement (11), das in einem elastisch verformbaren Material ausgeführt und dem Greifelement (8) wirksam zugeordnet ist und mindestens einen ersten Endabschnitt (11a) aufweist, der in wirksamen Stellungen bereitgestellt ist, am ersten Tragrahmen (4) anzuschlagen und eine entsprechende Schubwirkung dem Greifmittel (8) zu übertragen, um dessen schnappartige Koppelung mit dem Verankerungsbereich (3) zu bewirken, wobei das Greifelement (8) mindestens eine Hinterschneidung (9) festlegt, um eine entsprechende Nase (10) aufzunehmen, die im Verankerungsbereich (3) des ersten Tragrahmens (4) gebildet ist, wobei das Schubelement eine Schubwirkung bewirkt, die ein zur Berührungsfläche zwischen der Hinterschneidung (9) und der Nase (10) senkrecht gerichtete Resultierende besitzt;
- wobei der Basisabschnitt (2) überdies ein Hilfsdichtelement (13) besitzt, das mit einer wirksamen Fläche (14) des Greifelementes (8) gekoppelt ist, das in Richtung der Nase (10) des Verankerungsbereiches (3) gerichtet ist.

2. Dichtungsstreifen nach Anspruch 1, dadurch gekennzeichnet, dass das Schubelement (11) längs des Umfanges dem Greifelement zugeordnet ist.

3. Dichtungsstreifen nach Anspruch 1, dadurch gekennzeichnet, dass das Schubelement (11) mit dem Greifelement (8) fest gekoppelt ist.

4. Dichtungsstreifen nach Anspruch 3, dadurch gekennzeichnet, dass das Schubelement (11) dem Greifelement (8) über Koextrusion gekoppelt ist.

5. Dichtungsstreifen nach Anspruch 1, dadurch gekennzeichnet, dass das Schubelement (11) einen zweiten Endabschnitt (11b) aufweist, der in einer gegenüber dem ersten Abschnitt (11a) im wesentlichen gegenüberliegenden Stellung angeordnet und gleichfalls bereitgestellt ist, in wirksamen Stellungen am ersten Tragrahmen (4) anzuschlagen.

6. Dichtungsstreifen nach Anspruch 1, dadurch gekennzeichnet, dass das Hilfsdichtelement (13) mindestens einen Dichtmassenstreifen umfasst, der dem Greifelement in Längsrichtung zugeordnet ist.

7. Dichtungsstreifen nach Anspruch 6, dadurch gekennzeichnet, dass der Dichtmassenstreifen sich im Bereich eines Zwischenraumes (15) erstreckt, der, wenn der Basisabschnitt (2) mit dem Verankerungsbereich (3) wirksam gekoppelt ist, zwischen der Nase (10) und der wirksamen Fläche (14) des Greifelementes (8) festgelegt ist.

8. Dichtungsstreifen nach Anspruch 6, dadurch gekennzeichnet dass, der Dichtmassenstreifen (13) in einem Material ausgeführt ist, das Weichheitsmerkmale aufweist die, in der Zeit im wesentlichen konstant sind.

9. Dichtungsstreifen nach Anspruch 1, dadurch gekennzeichnet, dass mindestens der erste Endabschnitt (11a) eine umgestülpte Enddichtlippe (12) aufweist.

## Revendications

1. Bande de calfeutrage, notamment pour cadres de portes, fenêtres et analogues, comprenant:
- une portion de base (2) destinée à être insérée dans une zone d'ancrage respective (3) d'un premier bâti support (4) ;
- une portion de tête (5) reliée à ladite portion de base (2) et disposée de telle sorte qu'elle agit en butée sur une zone formant feuillure d'un deuxième bâti support (7);
- la portion de base (2) ayant un élément de fixation (8) réalisé en matière sensiblement rigide destiné à effectuer l'engagement de ladite zone d'ancrage (3) du premier bâti support (4) ; et un élément de poussée (11) réalisé en matière élastiquement déformable associé de manière opérationnelle à l'élément de fixation (8) et ayant au moins une première portion terminale (11a) destinée à agir, en conditions de fonctionnement, en butée sur ledit premier bâti (4) et à transmettre une action de poussée correspondante à l'élément de fixation (8) pour causer son enclenchement à déclic à ladite zone d'ancrage (3), ledit élément de fixation (8) définissant au moins un renfoncement (9) recevant en engagement une saillie correspondante (10) formée en correspondance de la zone d'ancrage (3) dudit premier bâti (4), ledit élément de poussée donnant lieu à une action de poussée ayant une résultante dirigée perpendiculairement à la zone de contact entre le renfoncement (9) et la saillie (10);
- la portion de base (2) ayant en outre un élément auxiliaire assurant l'étanchéité qui est accouplé à une surface opérante (14) de l'élément de fixation (8) en regard de la saillie (10) de ladite zone d'ancrage (3).

2. Bande de calfeutrage selon la revendication 1, caractérisée en ce que ledit élément de poussée (11) est associé le long de son pourtour audit élément de fixation.

3. Bande de calfeutrage selon la revendication 1, caractérisée en ce que l'élément de poussée (11) est accouplé de manière solidaire audit élément de fixation (8).

4. Bande de calfeutrage selon la revendication 3, caractérisée en ce que l'élément de poussée (11) est accouplé à l'élément de fixation (8) par co-extrusion.

5. Bande de calfeutrage selon la revendication 1, caractérisée en ce que ledit élément de poussée (11) a une deuxième portion terminale (11b) disposée à une position essentiellement opposée par rapport à ladite première portion (11a) et également destinée à agir, en conditions de fonctionnement, en butée sur ledit premier bâti (4).

6. Bande de calfeutrage selon la revendication 1, caractérisée en ce que ledit élément auxiliaire assurant l'étanchéité (13) comporte au moins une bande étroite de matière assurant l'étanchéité associée longitudinalement audit élément de fixation.

7. Bande de calfeutrage selon la revendication 6, caractérisée en ce que ladite bande étroite s'étend dans un espace vide (15) qui, quand la portion de base (2) est accouplée de manière opérationnelle à ladite zone d'ancrage (3), est défini entre ladite saillie (10) et la surface opérante (14) de l'élément de fixation (8).

8. Bande de calfeutrage selon la revendication 6, caractérisée en ce que ladite bande étroite assurant l'étanchéité (13) est réalisée en matière ayant des caractéristiques de souplesse qui ne changent pas avec le temps.

9. Bande de calfeutrage selon la revendication 1, caractérisée en ce qu'au moins ladite première portion terminale (11a) est pourvue d'une lèvre terminale étanche relevée.
